(19) **Europäisches Patentamt / European Patent Office / Office européen des brevets**

(11) **EP 1 805 740 B1**

(12) **EUROPEAN PATENT SPECIFICATION**

(45) Date of publication and mention
of the grant of the patent:
**25.03.2009 Bulletin 2009/13**

(51) Int Cl.:
*G08B 21/02* (2006.01)     *G10L 21/02* (2006.01)

(21) Application number: **05789485.9**

(22) Date of filing: **10.10.2005**

(86) International application number:
**PCT/IB2005/053316**

(87) International publication number:
**WO 2006/043193 (27.04.2006 Gazette 2006/17)**

(54) **A SYSTEM FOR MONITORING A PERSON**

SYSTEM ZUR ÜBERWACHUNG EINER PERSON

SYSTEME PERMETTANT DE SURVEILLER UNE PERSONNE

(84) Designated Contracting States:
**AT BE BG CH CY CZ DE DK EE ES FI FR GB GR HU IE IS IT LI LT LU LV MC NL PL PT RO SE SI SK TR**

(30) Priority: **18.10.2004 EP 04105115**

(43) Date of publication of application:
**11.07.2007 Bulletin 2007/28**

(73) Proprietor: **Koninklijke Philips Electronics N.V.
5621 BA Eindhoven (NL)**

(72) Inventor: **KOURZANOV, Petr
NL-5656 AA Eindhoven (NL)**

(74) Representative: **Groenendaal, Antonius W. M.
Philips
Intellectual Property & Standards
P.O. Box 220
5600 AE Eindhoven (NL)**

(56) References cited:
**EP-A- 1 435 606          DE-A1- 4 106 405
GB-A- 2 391 673          US-A- 6 043 747
US-A1- 2002 135 485          US-A1- 2003 067 391**

**Description**

The invention relates to a system for monitoring a person, in particular a baby.

An embodiment of the system of the kind described in the opening paragraph is known from United States patent application 2003/0067391. The known system is called a baby phone. The system comprises a baby unit and a parent unit. The baby unit is arranged to capture sound in a first room and is arranged to transmit a signal representing that sound. The parent unit, which in operation is typically located in a second room, is arranged to receive the transmitted signal and to reproduce the captured sound. Typically, the sound as captured, transmitted and reproduced corresponds to the sound as generated by the person to be monitored, i.e. the baby. The system provides the functionality of remotely monitoring a person. Although the known system performs relatively well, improvements are needed.

It is an object of the invention to provide system of the kind described in the opening paragraph having an improved performance.

This object of the invention is achieved in that the system for monitoring a person, comprises:

- a sound capturing unit comprising:

  - sound converting means for converting a first sound into a first signal;
  - receiving means for receiving a second signal corresponding to a second sound being audible in a neighborhood of the sound capturing unit;
  - extracting means for extracting a third signal on basis of the first signal and the second signal; and
  - transmitting means for transmitting the third signal; and

- a sound rendering unit comprising:

  - receiving means for receiving the third signal; and
  - sound generation means for generating a third sound on basis of the third signal.

The system for monitoring a person according to the invention is arranged to filter out a part of the total sound which is audible in the environment of the sound capturing unit. It is assumed that the total sound, i.e. first sound, is a composition of sound as generated by the person to be monitored and a second sound which is known. By filtering out the second sound from the first sound, the sound as generated by the person to be monitored, i.e. third sound, remains. Only the third signal corresponding to the third sound is transmitted to the sound rendering unit.

In an embodiment of the system for monitoring a person according to the invention, the extracting means is arranged to extract the third signal by means of subtracting the second signal from the first signal. Optionally, the extracting means comprises weighting means for weighting the second and/or first signal before subtraction. Optionally, extracting means comprises a delay means for delaying the second signal relative to the first signal or vice versa. Filtering out a part of an audio signal is a well-known technique, e.g. for echo cancellation in telecom lines. See for instance WO0193554 or US 4.903.247. The usage of the technique for systems for monitoring a person is new. Suppression of a part of an audio signal works relatively well, if that part is known. Knowledge about that audio signal may be known if it is generated by a known source, like a music player. For instance in the case of monitoring a baby, the following set-up may be expected. In the room of the baby, i.e. where the sound capturing unit is located, a compact disc player is turned on for playing music in order to get the baby sleepy. The sound capturing unit is arranged to capture all sound in the room of the baby, i.e. the sound of the baby and the music. The compact disc player is connected with the system for monitoring a person according to the invention in order to provide the system for monitoring a person with a second signal corresponding to the music. By suppressing the second signal from the first signal, the sound of the baby remains. Only the signal corresponding to the sound of the baby is transmitted. That means that the parents, who are observing the baby, are not confronted with the music of the baby. With a baby phone according to the prior art, the parents are confronted with the music.

Preferably, the converting means comprises a microphone and the sound generation means comprises a speaker.

As explained above in the example of the baby phone, the second signal corresponding to the music may be generated by an external system like a compact disc player. That means that the receiving means for receiving the second signal comprises a connector for connecting the sound capturing unit with a further system which is arranged to generate the second signal. Alternatively, the system for monitoring a person according to the invention, comprises means for generating the second signal, i.e. the second signal is generated by the system for monitoring a person itself. That means that, the sound capturing unit of the system for monitoring a person according to the invention is arranged to generate sound, e.g. music. The music may be derived from a broadcast signal or Internet connection, i.e. radio. Alternatively, the second signal is derived from locally stored pre-recorded data. Preferably, the means for generating the second signal comprises a memory device for storage of pre-recorded data corresponding to the second signal. Alternatively, the means for generating the second signal comprises reading means for reading pre-recorded data which is stored on a data storage medium, e.g. a compact disc.

The second signal may correspond to music but also to spoken language, e.g. noise from the parents.

In an embodiment of the system for monitoring a person according to the invention, the transmitting means is arranged to compare the strength of a portion of the third signal with a predetermined threshold and is arranged to transmit the portion of the third signal if the strength of the portion of the third signal is higher than the predetermined threshold. An advantage of this embodiment according to the invention, is that the third signal is conditionally sent. That means that there is no continuous transmission of captured sound. Only when the amount of sound reaches a predetermined threshold a transmission is initiated.

These and other aspects of the system for monitoring a person, according to the invention will become apparent from and will be elucidated with respect to the implementations and embodiments described hereinafter and with reference to the accompanying drawings, wherein:

Fig. 1 schematically shows an embodiment of the system for monitoring a person; and
Fig. 2 schematically shows another embodiment of the system for monitoring a person, comprising a music generating device.

Same reference numerals are used to denote similar parts throughout the Figures.

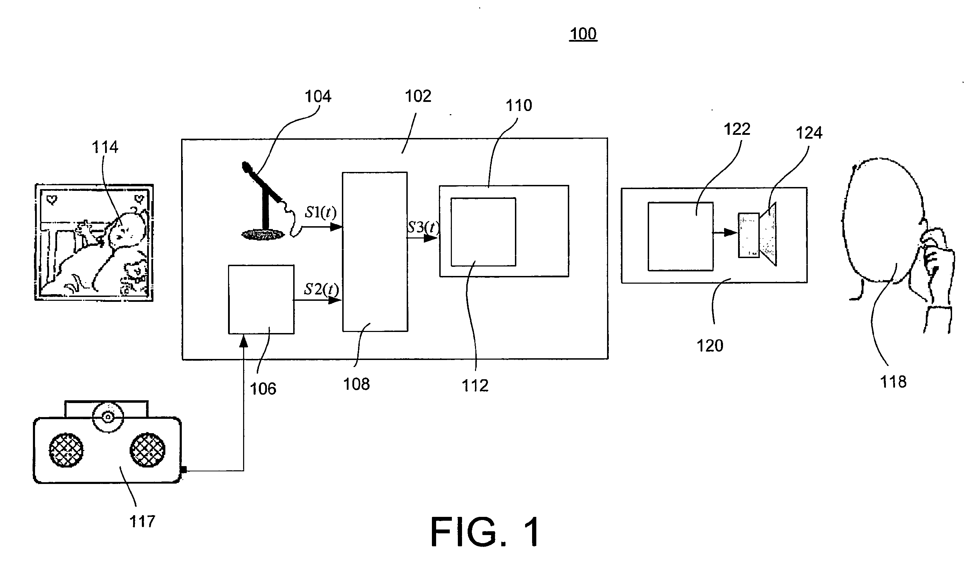

Fig. 1 schematically shows an embodiment of the system 100 for monitoring a person, according to the invention. The embodiment of the system 100 for monitoring a person is a baby phone. The baby phone 200 is a pair of units for remote monitoring on basis of sounds usually made by small children. The pair of units comprises a sound capturing unit 102, i.e. a baby unit and a sound rendering unit 120, i.e. parents unit. The function of the sound capturing unit 102 is capturing sound in a first location where the baby 114 is located. The function of the sound rendering unit 120 is rendering sound on basis of a signal received from the sound capturing unit 102. The sound rendering unit 102 is typically located in a second location where the parent 118 is located.

The sound capturing unit 102 comprises:

- sound converting means 104 for converting a first sound into a first signal $S1(t)$. Preferably, the sound converting means comprises a microphone. The sound converting means 104 is arranged to capture most of the noise in the room of the baby, i.e. the first location. The noise in the room of the baby is assumed to be composed of the sound as generated by the baby and the sound as generated by a second source 117. The second source 117 may be e.g. a compact disk player or a radio. Optionally, the second source 117 is a device which is arranged to generate music on basis of data which is stored as WMA (Windows media audio) or MPEG layer 3 (MP3) file;

- receiving means 106 for receiving a second signal $S2(t)$ corresponding to a second sound being audible in a neighborhood of the sound capturing unit 102. The receiving means 106 may comprise a physical connector for connecting the sound capturing unit 102 with the second source 117. Alternatively there is a wireless connection between the receiving means 106 and the second source 117. Optionally, the receiving means 106 comprises an A/D converter for converting an analog received second signal S2 into a digital second signal $S2(t)$ ;

- extracting means 108 for extracting a third signal $S3(t)$ on basis of the first signal $S1(t)$ and the second signal $S2(t)$. Preferably, the extracting means 108 comprises a DSP (digital signal processor) for subtracting the second signal $S2(t)$ from the first signal $S1(t)$ in order to achieve the filtered third signal $S3(t)$; and

- transmitting means 110 for transmitting the third signal $S3(t)$. Preferably, the transmitting means 110 comprises an antenna in order to set up a radio link with the sound rendering unit 120. In that case the transmitting means 110 also comprises modulation means for modulating the third signal $S3(t)$. Alternatively, the sound capturing unit 102 and the sound rendering unit 120 are mutually connected by means of a wire.

Optionally, the transmitting means 110 comprises means for computing the strength of a portion of the third signal $S3(t)$ and for comparing the strength with a predetermined silence detection threshold. The transmitting means 110 is arranged to transmit the portion of the third signal $S3(t)$ if the strength of the portion of the third signal is higher than the predetermined silence detection threshold. As a consequence, only when the sound level is relatively high a transmission of the third signal $S3(t)$ is initiated for a while. Otherwise, in the case of relative silence, there is no transmission. This functionality is also called silence detection. Alternatively, this functionality is implemented in the extracting means 108.

The transfer function of the sound capturing unit 102 is specified in equation 1.

$$S3(t) = S(t) \left[ \frac{\int_{t-\delta}^{t} S^2(x)dx}{T} > 1 \right] \qquad (1)$$

with $T$ being the predetermined silence detection threshold, $\delta$ being a predetermined silence detection period and

$$S(t) = S1(t) - wS2(t) \qquad (2)$$

with w a constant weighting factor, $S1(t)$ the first signal as function of time $t$ and $S2(t)$ the second signal as function of time.

Optionally, a phase delay $\varphi$ between the first signal $S1(t)$ and second signal $S2(t)$ has to be corrected for. Temporally buffering one of the signals by means of a storage device is required for that the correction.

$$S(t) = S1(t) - wS2(t - \varphi) \qquad (3)$$

The sound rendering unit 120 comprises:

- receiving means 122 for receiving the third signal. Preferably, the receiving means 122 comprises an antenna in order to set up a radio link with the sound capturing unit 102. In that case the receiving means 122 comprises demodulation means for modulating a signal corresponding to the third signal $S3(t)$. Alternatively, the sound capturing unit 102 and the sound rendering unit 120 are mutually connected by means of a wire; and
- sound generation means 124 for generating a third sound on basis of the third signal. Typically, the sound generating means comprises a loudspeaker.

The working of the baby phone is as follows. The baby 114 is put in his bed which is located in a sleeping room where the sound capturing unit 102 is located. The baby is not yet sleepy. The baby dislikes silence, since that enhances the feeling of being alone. The parent 118 of the baby 114 connects the compact disk player 117 with the baby unit 102 and turns on the compact disk player 117. The parent 118 leaves the sleeping room and goes to the living room, where the parent unit 120 is located. The baby is crying silently for a couple of minutes. In the same period of time the compact disk player 117 is playing soft music. The sound converting means 104 of the sound capture unit 102 registers both the music being generated by the compact disk player 117 and the sound of the voice of the baby 114. The receiving means 106 of the sound capture unit 102 only receives the music being generated by the compact disk player 117. The extracting means 108 of the sound capture unit 102 combines the first signal $S1(t)$ from the sound converting means 104 and the second signal $S2(t)$ from the receiving means 106 resulting into a third signal $S3(t)$ which only represents the sound of the voice of the baby 114. The transmitting means 110 determines whether the sound of the voice of the baby is relatively loud for a predetermined silence detection period $\delta$. If that is the case, transmission of a transmission signal which is based on the third signal $S3(t)$ is initiated. The transmission signal is a received by the parents unit 120. After demodulation of the transmission signal the sound generation means 124 of the parents unit 120 generates a sound corresponding to the sound of voice of the baby 114. The parent 118 does not hear the sound of the compact disk player 117.

If after a while the baby has fallen asleep and hence does not produce sound which is louder than the predetermined silence detection threshold, no transmission from the sound capturing unit 102 takes place.

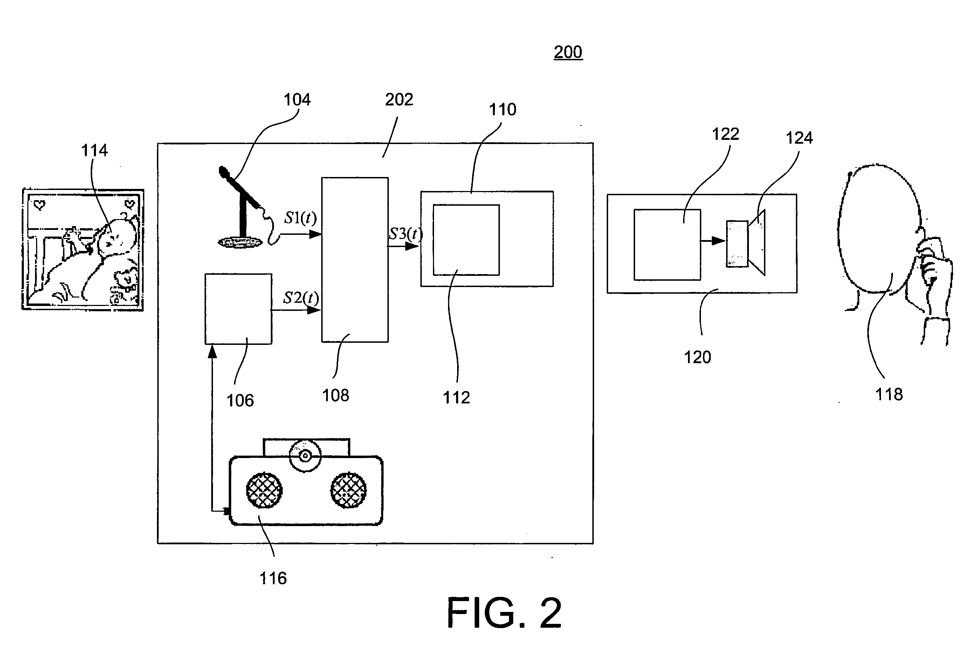

Fig. 2 schematically shows another embodiment of the system 200 for monitoring a person, comprising a music generating device 116. This embodiment of the system 200 for monitoring a person is basically equal to the embodiment of the system 100 for monitoring a person as described in connection with Fig. 1. The difference is that the second source 117 as described in connection with Fig. 1 is replaced by a music generating device 116 which is integrated in the sound capturing unit 202 instead of being a separate apparatus. The music generating device 116 may be a device for generating music as described above for the second source 117. Alternatively, the music generating device 116 is arranged to reproduce sound captured from the parents, e.g. the voice of the parents when talking to the baby.

Optionally, the embodiment of the system 200 for monitoring a person is arranged to turn off the music generating device 116 automatically. For instance if the system 200 has determined that the baby has not produced any clear sound for a particular period of time. Alternatively, the music generating device 116 may be turned off remotely by means of the parents unit 120.

It should be noted that although the figure descriptions disclose a baby phone, alternative embodiments are possible. The system according to the invention may also be applied for monitoring other persons, e.g. ill or elderly people.

It should be noted that the above-mentioned embodiments illustrate rather than limit the invention and that those skilled in the art will be able to design alternative embodiments without departing from the scope of the appended claims. In the claims, any reference signs placed between parentheses shall not be constructed as limiting the claim. The word 'comprising' does not exclude the presence of elements or steps not listed in a claim. The word "a" or "an" preceding an element does not exclude the presence of a plurality of such elements. The invention can be implemented by means of hardware comprising several distinct elements and by means of a suitable programmed computer. In the unit claims enumerating several means, several of these means can be embodied by one and the same item of hardware. The usage of the words first, second and third, etcetera do not indicate any ordering. These words are to be interpreted as names.

**Claims**

1. A system (200) for monitoring a person (116), comprising:

   - a sound capturing unit (202) comprising:

      - sound converting means (104) for converting a first sound into a first signal ($S1(t)$);
      - receiving means (106) for receiving a second signal ($S2(t)$) corresponding to a second sound being audible in a neighborhood of the sound capturing unit (202);
      - extracting means (108) for extracting a third signal ($S3(t)$) by means of subtracting the second signal ($S2(t)$) from the first signal ($S1(t)$); and
      - transmitting means (110) for transmitting the third signal ($S3(t)$); and

   - a sound rendering unit (120) comprising:

      - receiving means (122) for receiving the third signal ($S3(t)$); and
      - sound generation means (124) for generating a third sound on basis of the third signal ($S3(t)$).

2. A system (200) as claimed in claim 1, whereby the sound converting means (104) comprises a microphone.

3. A system (200) as claimed in any of the claims above, whereby the sound generation means (124) comprises a speaker.

4. A system (200) as claimed in any of the claims above, comprising means (116) for generating the second signal ($S2(t)$).

5. A system (200) as claimed in claim 4, whereby the means (116) for generating the second signal ($S2(t)$) comprises a memory device for storage of pre-recorded data corresponding to the second signal.

6. A system (200) as claimed in claim 4, whereby the means (116) for generating the second signal ($S2(t)$) comprises reading means for reading pre-recorded data which is stored on a data storage medium.

7. A system (100) as claimed in any of the claims above, whereby the receiving means (106) for receiving the second signal comprises a connector for connecting the sound capturing unit (102) with a further system (117), which is arranged to generate the second signal ($S2(t)$).

8. A system (200) as claimed in any of the claims above, whereby the transmitting means is arranged to compare the strength of a portion of the third signal ($S3(t)$) with a predetermined threshold and is arranged to transmit the portion of the third signal ($S3(t)$) if the strength of the portion of the third signal ($S3(t)$) is higher than the predetermined threshold.

**Patentansprüche**

1. System (200) zur Überwachung einer Person (114), mit:

   einer Tonerfassungseinheit (202) mit:

- Tonumwandlungsmitteln (104) zur Umwandlung eines ersten Tons in ein erstes Signal ($S1(t)$);
- Empfangsmitteln (106) zum Empfang eines zweiten Signals (S2(t)) entsprechend einem in einer Umgebung der Tonerfassungseinheit (202) hörbaren, zweiten Ton;
- Extraktionsmitteln (108), um durch Subtrahieren des zweiten Signals (S2(t)) von dem ersten Signal (S1(t)) ein drittes Signal (S3(t)) zu extrahieren; sowie
- Übertragungsmitteln (110) zur Übertragung des dritten Signals (S3(t)); und

einer Tonwiedergabeeinheit (120) mit;

- Empfangsmitteln (122) zum Empfang des dritten Signals (S3(t)), sowie
- Tonerzeugungsmitteln (124) zur Erzeugung eines dritten Tons aufgrund des dritten Signals (S3(t)).

2. System (200) nach Anspruch 1, wobei die Tonumwandlungsmittel (104) ein Mikrophon umfassen.

3. System (200) nach einem der vorangegangenen Ansprüche, wobei die Tonerzeugungsmittel (124) einen Lautsprecher umfassen.

4. System (200) nach einem der vorangegangenen Ansprüche, mit Mitteln (116) zur Erzeugung des zweiten Signals (S2(t)).

5. System (200) nach Anspruch 4, wobei die Mittel (116) zur Erzeugung des zweiten Signals (S2(t)) eine Speichereinrichtung zur Speicherung von vorher aufgezeichneten Daten entsprechend dem zweiten Signal umfassen.

6. System (200) nach Anspruch 4, wobei die Mittel (116) zur Erzeugung des zweiten Signals (S2(t)) Ablesemittel zum Ablesen von vorher aufgezeichneten Daten, die auf einem Datenspeichermedium gespeichert sind, umfassen.

7. System (100) nach einem der vorangegangenen Ansprüche, wobei die Empfangsmittel (106) zum Empfang des zweiten Signals einen Steckverbinder umfassen, um die Tonerfassungseinheit (102) mit einem weiteren System (117) zu verbinden, welches zur Erzeugung des zweiten Signals (S2(t)) angeordnet ist.

8. System (200) nach einem der vorangegangenen Ansprüche, wobei die Übertragungsmittel so vorgesehen sind, dass sie die Stärke eines Teils des dritten Signals (S3(t)) mit einem vorgegebenen Schwellwert vergleichen und den Teil des dritten Signals (S3(t)) übertragen, wenn die Stärke des Teils des dritten Signals (S3(t)) höher als der vorgegebene Schwellwert ist.

**Revendications**

1. Système (200) pour surveiller une personne (116), comprenant :

- une unité de captage de son (202) comprenant :

- des moyens de conversion de son (104) pour convertir un premier son en un premier signal ($S1(t)$) ;
- des moyens de réception (106) pour recevoir un deuxième signal ($S2(t)$) correspondant à un deuxième son qui est audible dans un environnement de l'unité de captage de son (202) ;
- des moyens d'extraction (108) pour extraire un troisième signal (S3(t)) par la soustraction du deuxième signal (S2(t)) au premier signal ($S1(t)$) ; et
- des moyens de transmission (110) pour transmettre le troisième signal ($S3(t)$) ; et

- une unité de rendu de son (120) comprenant :

- des moyens de réception (122) pour recevoir le troisième signal ($S3(t)$) ; et
- des moyens de génération de son (124) pour générer un troisième son sur la base du troisième signal ($S3(t)$).

2. Système (200) selon la revendication 1, suivant lequel les moyens de conversion de son (104) comprennent un microphone.

**3.** Système (200) selon l'une quelconque des revendications précédentes 1 à 2, suivant lequel les moyens de génération de son (124) comprennent un haut-parleur.

**4.** Système (200) selon l'une quelconque des revendications précédentes 1 à 3, comprenant des moyens (116) pour générer le deuxième signal ($S2(t)$).

**5.** Système (200) selon la revendication 4, suivant lequel les moyens (116) pour générer le deuxième signal ($S2(t)$) comprennent un dispositif à mémoire pour le stockage de données préenregistrées qui correspondent au deuxième signal.

**6.** Système (200) selon la revendication 4, suivant lequel les moyens (116) pour générer le deuxième signal ($S2(t)$) comprennent des moyens de lecture pour la lecture de données préenregistrées qui sont stockées sur un support de stockage de données.

**7.** Système (100) selon l'une quelconque des revendications précédentes 1 à 6, suivant lequel les moyens de réception (106) pour la réception du deuxième signal comprennent un connecteur pour la connexion de l'unité de captage de son (102) à un nouveau autre système (117) qui est agencé de manière à générer le deuxième signal ($S2(t)$).

**8.** Système (200) selon l'une quelconque des revendications précédentes 1 à 7, suivant lequel les moyens de transmission sont agencés de manière à comparer l'intensité d'une partie du troisième signal ($S3(t)$) à un seuil prédéterminé et sont agencés de manière à transmettre la partie du troisième signal ($S3(t)$) si l'intensité de la partie du troisième signal ($S3(t)$) est supérieure au seuil prédéterminé.

FIG. 1

FIG. 2

200

114 104 202 110 122 124

$S1(t)$

$S3(t)$

$S2(t)$

106 108 112 120 118

116

EP 1 805 740 B1

9

**EP 1 805 740 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030067391 A
- WO 0193554 A

- US 4903247 A